# EUROPEAN PATENT APPLICATION

(11) **EP 4 372 276 A1**
(43) Date of publication of application: **22.05.2024**
(21) Application number: 23192894.6
(22) Date of filing: 23.08.2023
(51) Int. Cl.: F23C 99/00

(54) **METHODS AND SYSTEMS FOR DECOMPOSING A FEEDSTOCK GAS**

(30) Priority: 21.11.2022 US 202263427026 P
(71) Applicant: Ekona Power Inc., Burnaby, British Columbia, V5A 2H5 (CA)
(72) Inventor: LEBOE, David Aaron, Vancouver (CA); COLEMAN, Timothy Scott, Port Moody (CA); KENDRICK, Donald W., Bellevue (US); KRATSCHMAR, Kenneth William, Vancouver (CA)
(74) Representative: Hamer, Thomas Daniel

(57) **Abstract**

A method of decomposing a feedstock gas includes introducing the feedstock gas into a mixing chamber and introducing a combustion gas into a combustion chamber connected to the mixing chamber. The combustion gas is combusted so as to produce combustion product gases. A first portion of the combustion products gases flows into the mixing chamber and mixes with the feedstock gas, and a second portion of the combustion products gases initially remains in the combustion chamber. At least some of the feedstock gas is decomposed as a result of the first portion of the combustion products gases flowing into the mixing chamber and mixing with the feedstock gas. At least some of the second portion of the combustion product gases is flowed into the mixing chamber, and the at least some of the second portion of the combustion product gases is mixed with undecomposed feedstock gas, so as to decompose at least some of the undecomposed feedstock gas.

## Description

### Field

The present disclosure relates to pyrolysis and in particular to methods and systems for decomposing a feedstock gas.

### Background

Thermal pyrolysis is a method by which a feedstock gas, such as a hydrocarbon, is decomposed into its constituent elements (in the case of a hydrocarbon, carbon and hydrogen) without oxygen. The decomposition is triggered by sufficiently raising the temperature of the feedstock gas to a point at which the chemical bonds of the elements of the feedstock gas break down.

Such pyrolysis may be achieved, for example, by bringing the feedstock gas into thermal contact with a hot fluid. For instance, combustion product gases, formed as a result of combusting a combustible fuel, may be mixed with the feedstock gas. At high-enough temperatures, the mixing of the hot fluid with the feedstock gas, and the transfer of thermal energy from the hot fluid to the feedstock gas, is sufficient to cause the feedstock gas to break down and decompose.

During some forms of thermal pyrolysis, not all of the products of the combustion may mix with the feedstock gas. This means that the thermal energy of a significant fraction of combustion products is not transferred to the feedstock gas and therefore does not contribute to the pyrolysis.

### Summary

According to a first aspect of the disclosure, there is provided a method of decomposing a feedstock gas, comprising: introducing the feedstock gas into a mixing chamber; introducing a combustion gas into a combustion chamber connected to the mixing chamber; combusting the combustion gas so as to produce one or more combustion product gases, wherein: a first portion of the one or more combustion products gases flows into the mixing chamber and mixes with the feedstock gas; and a second portion of the one or more combustion products gases initially remains in the combustion chamber; decomposing at least some of the feedstock gas as a result of the first portion of the one or more combustion products gases flowing into the mixing chamber and mixing with the feedstock gas; and flowing at least some of the second portion of the one or more combustion product gases into the mixing chamber and mixing the at least some of the second portion of the one or more combustion product gases with undecomposed feedstock gas, so as to decompose at least some of the undecomposed feedstock gas.

The second portion of the one or more combustion product gases may initially remain in the combustion chamber as a result of a pressure in the combustion chamber being equal to a pressure in the mixing chamber.

Flowing the at least some of the second portion of the one or more combustion product gases into the mixing chamber may comprise increasing a pressure within the combustion chamber to force the at least some of the second portion of the one or more combustion product gases into the mixing chamber.

Increasing the pressure within the combustion chamber may comprise reducing a volume of the combustion chamber.

Reducing the volume of the combustion chamber may comprise using a piston to reduce the volume of the combustion chamber.

Flowing the at least some of the second portion of the one or more combustion product gases may comprise introducing a fluid into the combustion chamber to increase a pressure in the combustion chamber and force the at least some of the second portion of the one or more combustion product gases into the mixing chamber.

The fluid may be further feedstock gas.

Decomposing the at least some of the feedstock gas may produce one or more product gases. The method may further comprise venting the one or more product gases from the mixing chamber. The fluid may comprise at least some of the vented one or more product gases.

The fluid may comprise one or more of hydrogen, carbon dioxide, carbon monoxide, water, steam, an inert or non-reactive gas, and further feedstock gas.

The feedstock gas may comprise a hydrocarbon.

The hydrocarbon may be methane.

The combustion gas may comprise oxygen or air.

After decomposing at least some of the undecomposed feedstock gas, a third portion of the one or more combustion product gases may remain in the combustion chamber. The method may further comprise venting the third portion of the one or more combustion product gases from the combustion chamber.

The venting may comprise using a vent located at an end of the combustion chamber that is adjacent the mixing chamber.

According to a further aspect of the disclosure, there is provided a system for decomposing a feedstock gas, comprising: a source of combustion gas; a source of the feedstock gas; a combustion chamber connected to a mixing chamber; valving for opening and closing one or more openings in each of the combustion chamber and the mixing chamber; a driving mechanism; an igniter; one or more controllers configured to: control the valving so as to: cause the combustion gas to flow into the combustion chamber; cause the feedstock gas to flow into the mixing chamber; control the igniter so as to combust the combustion gas in the combustion chamber and thereby produce one or more combustion product gases, wherein: a first portion of the one or more combustion products gases flows into the mixing chamber, mixes with the feedstock gas, and thereby decomposes at least some of the feedstock gas; and a second portion of the one or more combustion products gases initially remains in the mixing chamber; and control the driving mechanism so as to cause at least some of the second portion of the one or more combustion product gases to flow into the mixing chamber, mix with the undecomposed feedstock gas, and thereby decompose at least some of the undecomposed feedstock gas.

The driving mechanism may comprise a piston.

The system may further comprise a vent in the combustion chamber. After decomposing at least some of the undecomposed feedstock gas, a third portion of the one or more combustion product gases may remain in the combustion chamber. The controller may be further configured to control the vent to vent the third portion of the one or more combustion product gases from the combustion chamber.

The vent may be located at an end of the combustion chamber that is adjacent the mixing chamber.

The driving mechanism may comprise a fluid. Controlling the driving mechanism may comprise controlling the valving so as to introduce the fluid into the combustion chamber.

This summary does not necessarily describe the entire scope of all aspects. Other aspects, features and advantages will be apparent to those of ordinary skill in the art upon review of the following description of specific embodiments.

### Brief Description of the Drawings

Embodiments of the disclosure will now be described in detail in conjunction with the accompanying drawings of which:
FIG. 1A shows an ignition stage of a first pyrolysis process, according to an embodiment of the disclosure;
FIG. 1B shows a mixing stage of the first pyrolysis process, according to an embodiment of the disclosure;
FIG. 1C shows a pre-reaction stage of the first pyrolysis process, according to an embodiment of the disclosure;
FIG. 1D shows a combustion product gas displacement stage of the first pyrolysis process, according to an embodiment of the disclosure
FIG. 1E shows a post-reaction stage of the first pyrolysis process, according to an embodiment of the disclosure;
FIG. 1F shows a quenching stage of the first pyrolysis process, according to an embodiment of the disclosure;
FIG. 1G shows a filling stage of the first pyrolysis process, according to an embodiment of the disclosure;
FIG. 2A shows an ignition stage of a second pyrolysis process, according to an embodiment of the disclosure;
FIG. 2B shows a mixing stage of the second pyrolysis process, according to an embodiment of the disclosure;
FIG. 2C shows a pre-reaction stage of the second pyrolysis process, according to an embodiment of the disclosure;
FIG. 2D shows a piston displacement stage of the second pyrolysis process, according to an embodiment of the disclosure
FIG. 2E shows a post-reaction stage of the second pyrolysis process, according to an embodiment of the disclosure;
FIG. 2F shows a quenching stage of the second pyrolysis process, according to an embodiment of the disclosure; and
FIG. 2G shows a filling stage of the second pyrolysis process, according to an embodiment of the disclosure.

### Detailed Description

The present disclosure seeks to provide improved methods and systems for decomposing a feedstock gas. While various embodiments of the disclosure are described below, the disclosure is not limited to these embodiments, and variations of these embodiments may well fall within the scope of the disclosure which is to be limited only by the appended claims.

Generally, according to embodiments of the disclosure, a feedstock gas is introduced into a mixing chamber, and a combustion gas or fuel and oxidizer is introduced into a combustion chamber connected to the mixing chamber. According to some embodiments, once introduced into their respective chambers, the feedstock gas and the combustion gas are at roughly equal pressures and therefore generally do not mix with one another. The combustion gas is then combusted so as to produce one or more combustion product gases (or simply "combustion product gases"). For example, one or more igniters may be used to produce ignition energy sufficient to trigger combustion of the combustion gas.

In response to the generation of the combustion product gases, a first portion of the combustion product gases flows into the mixing chamber and mixes with the feedstock gas, and a second portion of the combustion product gases initially remains in the combustion chamber. In particular, as the combustion gas combusts and produces the combustion product gases, the pressure within the combustion chamber increases and causes the first portion of the combustion product gases to enter the mixing chamber and mix with the feedstock gas. At least some of the feedstock gas is decomposed as a result of the first portion of the combustion products gases flowing into the mixing chamber and mixing with the feedstock gas. As this happens, the pressure within the combustion chamber falls until the pressure within the combustion chamber is roughly equal to the pressure within the mixing chamber. This results in the second portion of the combustion product gases initially remaining in the combustion chamber.

In order to drive further decomposition of the feedstock gas, at least some of the second portion of the combustion product gases is caused to flow into the mixing chamber and mix with undecomposed feedstock gas. For example, according to some embodiments, an additional fluid (such as additional feedstock gas) may be introduced into the combustion chamber so as to force some of the second portion of the combustion product gases out of the combustion chamber and into the mixing chamber. Alternatively, or in addition, a piston or some other mechanical driving means may be used to decrease the effective volume of the combustion chamber and thereby increase the pressure within the combustion chamber to force some of the second portion of the combustion product gases out of the combustion chamber and into the mixing chamber. According to some embodiments, the piston may be a fluidic piston rather than a mechanical piston. For example, the piston may comprise a relatively dense, inert fluid that may move back and forth like a mechanical piston, without entering the mixing chamber.

As a result, a greater proportion of the thermal energy generated from the combustion of the combustion gas may be extracted and exploited for decomposing the feedstock gas.

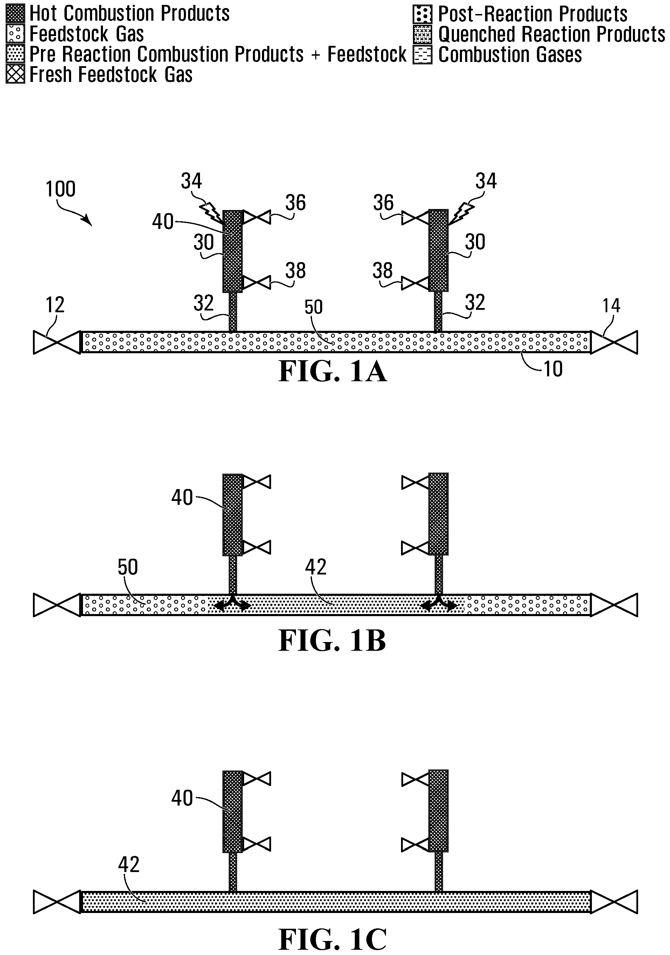

Turning to FIGS. 1A-1G, there is shown in detail a sequence of steps that occur during a pyrolysis process, according to an embodiment of the disclosure.

In FIG. 1A, there is shown a pyrolysis system 100 for decomposing a feedstock gas. Pyrolysis system 100 comprises a pair of combustion chambers 30 connected to a mixing chamber 10 via respective fluid pathways 32. Fluid pathways 32 may either remain open or may be valved to selectively allow the flow of fluids from combustion chambers 30 to mixing chamber 10. According to some embodiments, combustion chambers 30 may connect directly to mixing chamber 10 without the need for intermediary fluid pathways 32. According to still further embodiments, combustion chambers 30 may be provided within mixing chamber 10 such that fluid may flow out of combustion chambers 30 and directly into the interior of mixing chamber 10. While FIG. 1A shows two combustion chambers 30, it shall be understood that the present disclosure extends to any number of combustion chambers (such as a single or multiple combustion chambers) connected to a mixing chamber (or even multiple mixing chambers).

At a first end of mixing chamber 10 is provided an inlet valve 12 for selectively allowing the inflow of a feedstock gas into mixing chamber 10. At an opposite, second end of mixing chamber 10 is provided an outlet valve 14 for selectively allowing the outflow of gases within mixing chamber 10 to the exterior of mixing chamber 10.

Each combustion chamber 30 comprises an inlet valve 36 for selectively allowing the inflow of a combustion gas into combustion chamber 30, and an outlet valve 38 for selectively allowing the outflow of gases within combustion chamber 30 to the exterior of combustion chamber 30. Preferably, outlet valves 38 are positioned at the ends of combustion chambers 30 that are closest to fluid pathways 32. Each combustion chamber 30 further comprises one or more igniters 34 for providing ignition energy sufficient to drive combustion of the combustion gas that has been fed into combustion chamber 30.

The general structure of pyrolysis system 100 remains unchanged during its operation, and therefore with reference to FIGS. 1A-1G the structure of pyrolysis system 100 is not described in further detail.

Beginning at FIG. 1A, there is shown an ignition stage of pyrolysis system 100. Prior to this stage, a combustion gas (such as a combustible mixture of natural gas and oxygen) is provided to each combustion chamber 30 via inlet valves 36. At the same time, a feedstock gas 50 (such as a hydrocarbon) is provided to mixing chamber 10 via inlet valve 12. In the event that fluid pathways 32 are permanently open, combustion chambers 30 and mixing chamber 10 are filled with their respective gases such that the pressures within each chamber are roughly equal so that little to no mixing of the combustion gas and feedstock gas 50 occurs. Once filling of combustion chambers 30 and mixing chamber 10 is complete, inlet valves 12 and 36 are closed and pyrolysis system 100 is therefore considered a constant volume system.

During the ignition stage, igniters 34 are activated (for example, using a suitable controller, such as a microprocessor or circuitry operatively connected to igniters 34) so as to trigger combustion of the combustion gas within combustion chambers 30. The combustion of the combustion gas produces one or more hot combustion product gases (combustion products 40) within combustion chambers 30 and significantly increases the pressure within combustion chambers 30 relative to the pressure within mixing chamber 10.

Turning to FIG. 1B, there is shown a mixing stage of pyrolysis system 100. During the mixing stage, combustion products 40 flow into mixing chamber 10 via fluid pathways 32, and begin to mix with feedstock gas 50, forming a mixture 42 of pre-reaction combustion products gases and feedstock gas. As this occurs, the pressure within combustion chambers 30 begins to drop.

Turning to FIG. 1C, there is shown a pre-reaction stage of pyrolysis system 100. During the pre-reaction stage, a significant proportion of combustion products 40 have flowed into mixing chamber 10 and mixed with feedstock gas 50, filling mixing chamber 10 with mixture 42 of pre-reaction combustion products gases and feedstock gas. However, in response to the pressure within combustion chambers 30 dropping to roughly the same pressure within mixing chamber 10, a portion of combustion products 40 have remained within combustion chambers 30. By the end of this stage, the pressures in combustion chambers 30 and mixing chamber 10 have returned to roughly equal levels while still being greater than pre-ignition levels. In reality, the pyrolysis reaction generally occurs instantaneously upon mixing of the combustion products with the feedstock, and thus the pre-reaction stage described herein has been presented for the purpose of explanation of the cycle.

As a result of the flow of combustion products 40 into mixing chamber 10, and in particular, as a result of the mixing of combustion products 40 with feedstock gas 50 to form mixture 42, thermal energy is transferred from combustion products 40 to feedstock gas 50. Energy is also transferred from combustion products 40 to feedstock gas 50 via dynamic compression of feedstock gas 50 as a result of the pressure increasing within mixing chamber 10 in response to the flow of hot, pressurized combustion products 40 into mixing chamber 10. Past a certain point, the increase in the temperature of feedstock gas 50 is sufficient to drive decomposition or pyrolysis of feedstock gas 50. In the case of methane, the decomposition takes the following form:

CH₄ + energy → C + 2H₂

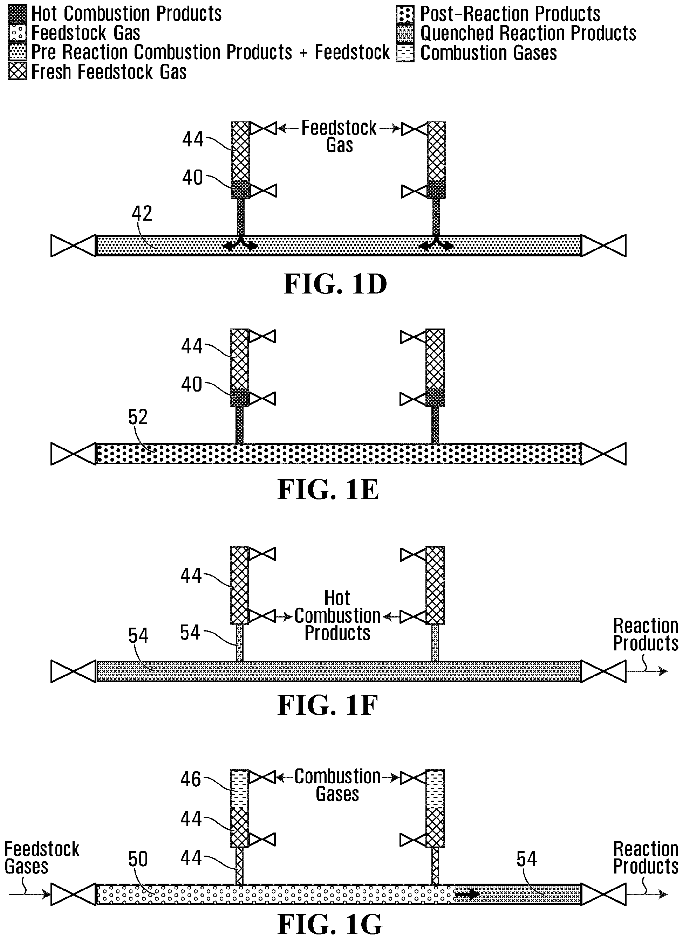

Turning to FIG. 1D, there is shown a combustion products displacement stage of pyrolysis system 100. During the combustion products displacement stage, fresh feedstock gas 44 is fed under pressure into combustion chambers 30 via inlet valves 36. The introduction of fresh feedstock gas 44 into combustion chambers 30 increases the pressure within combustion chambers 30 above that within mixing chamber 10 and thereby causes some of combustion products 40 remaining within combustion chambers 30 to flow into mixing chamber 10. These combustion products 40 mix with unreacted feedstock gas 50 within mixing chamber 10 and thereby drive further decomposition of feedstock gas 50 within mixing chamber 10. As a result, a greater overall proportion of hot combustion products 40 that are formed within combustion chambers 30 are caused to flow into mixing chamber 10 and drive decomposition of feedstock gas 50 therein. In addition, the increase of pressure within combustion chambers 30 (in response to the supply of fresh feedstock gas 44 to combustion chambers 30) may prevent reaction products generated in mixing chamber 10 as a result of the feedstock decomposition flowing back into combustion chambers 30.

Generally, fresh feedstock gas 44 may have to be delivered at a pressure that is higher than the pressure within mixing chamber 10 in order to drive combustion products 40 remaining within combustion chambers 30 and fluid pathways 32 into mixing chamber 10.

Turning to FIG. 1E, there is shown a post-reaction stage of pyrolysis system 100. During the post-reaction stage, the pressures within combustion chambers 30 and mixing chamber 10 have equalized. Some hot combustion products 40 remain in the lower portions of combustion chambers 30 (e.g. in the portions closest to fluid pathways 32) and in fluid pathways 32 themselves. Unreacted feedstock gas 44 remains in the upper portions of combustion chambers 30 (e.g. in the portions closest to inlet valves 36). Mixing chamber 10 generally comprises reaction products 52 formed from the decomposition of feedstock gas 50. For example, in the case of a hydrocarbon feedstock, mixing chamber 10 generally contains carbon and hydrogen as reaction products 52.

Turning to FIG. 1F, there is shown a quenching stage of pyrolysis system 100. During the quenching stage, outlet valve 14 is opened to quench the pyrolysis reaction, resulting in quenched reaction products 54 within mixing chamber 10 being extracted from mixing chamber 10 via outlet valve 14. In addition, all / most of combustion products 40 remaining within combustion chambers 30 and fluid pathways 32 are vented by opening outlet valves 38. Because of the positioning of outlet valves 38 relative to fluid pathways 32 and inlet valves 36, most if not all of unreacted feedstock gas 44 at the top of combustion chambers 30 is not vented but instead remains within combustion chambers 30 and may be used in the subsequent reaction cycle. Properly timing the opening of outlet valves 38 may assist in reducing the amount of unreacted feedstock gas 44 and/or quenched reaction products 54 that are vented out of outlet valves 38. At the end of the quenching stage, some quenched reaction products 54 remain within mixing chamber 10 and fluid pathways 32.

Turning to FIG. 1G, there is shown a filling stage of pyrolysis system 100. During the filling stage, fresh combustion gas 46 is fed into combustion chambers 30 via inlet valves 36. This increases the pressure within combustion chambers 30 and drives quenched reaction products 54 out of combustion chambers 30 and fluid pathways 32, and into mixing chamber 10. At the same time, fresh feedstock gas 50 is fed into mixing chamber 10 via inlet valve 12 and pushes quenched reaction products 54 within mixing chamber 10 out of mixing chamber 10 via outlet valve 14. At the end of the filling stage, combustion chambers 30 and fluid pathways 32 generally contain pressurized combustion gas (and any remaining unreacted feedstock gas 44) while mixing chamber 10 generally contains pressurized feedstock gas 50 (and any reaction products or combustion products that may not have been evacuated from mixing chamber 10) ready for decomposition in the next reaction cycle.

Advantageously, by using fresh feedstock gas to force some of the hot combustion products remaining within combustion chambers 30 into mixing chamber 10 ensures that no new gases are introduced into the system. In particular, the fresh feedstock gas being used in this manner will itself be subject to decomposition in the subsequent or a following reaction cycle.

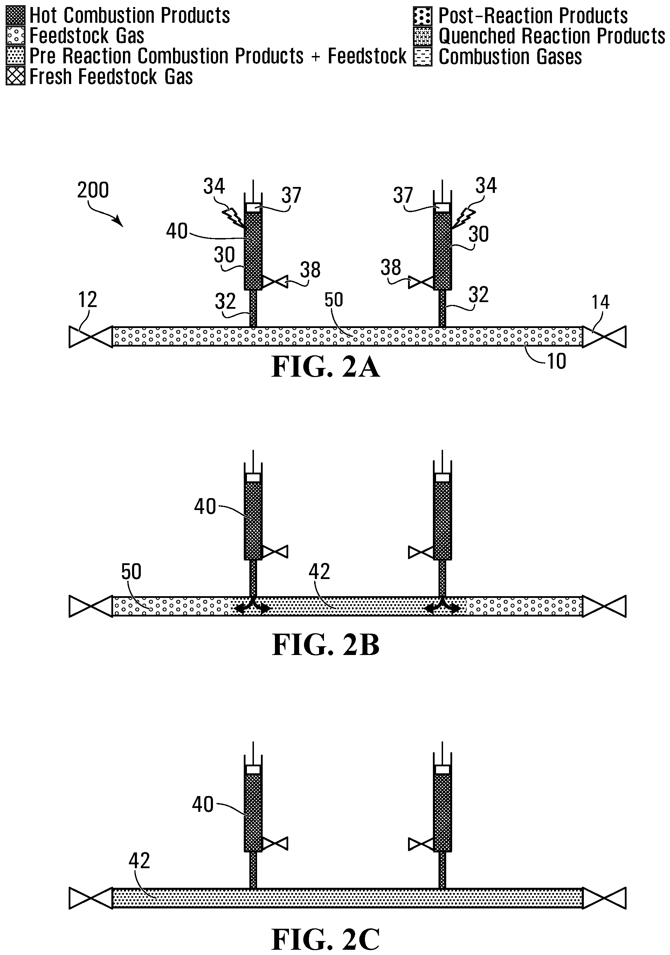

According to some embodiments, other means of forcing some of combustion products 40 remaining within combustion chambers 30 into mixing chamber 10 may be used. For example, instead of using fresh feedstock gas, another suitable fluid may be used, such as an inert gas. According to some embodiments, water may be used. If water were introduced, then the hot walls of combustion chambers 30 would vapourize the water into steam which would increase the pressure and push combustion products 40 into mixing chamber 10. According to some embodiments, the fluid that is used may comprise one or more components of any gases that are used to drive the pyrolysis system. For example, one or more of the vented combustion product gases may be used. As another example, one or more of the gases that are extracted from mixing chamber 10 may be recirculated to pyrolysis system 100 and re-used to drive combustion products 40 remaining within combustion chambers 30 into mixing chamber 10. According to still further embodiments, mechanical means may be used to force some of combustion products 40 remaining within combustion chambers 30 into mixing chamber 10. An example of this is shown in more detail in FIGS. 2A-2G.

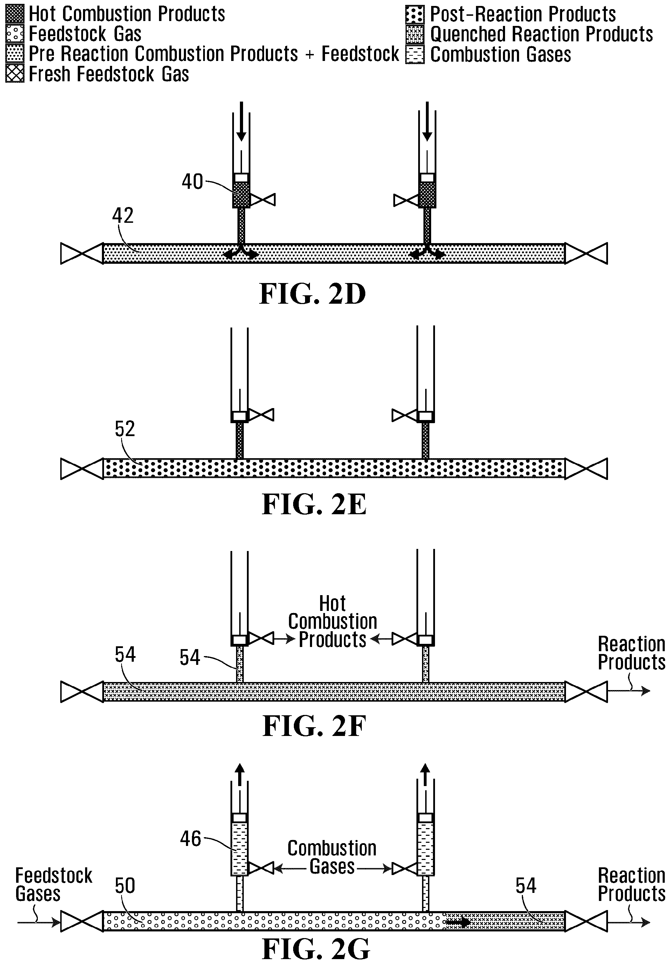

Turning to FIG. 2A, there is shown a pyrolysis system 200 for decomposing a feedstock gas. Pyrolysis system 200 is similar to pyrolysis system 100 and like components are therefore not described in further detail. However, unlike pyrolysis system 100, pyrolysis system 200 includes pistons 37 for reducing the effective volumes of combustions chambers 30. In addition, combustion chambers 30 do not include inlet valves 36 but instead include inlets/outlets 38 that may act as both inlets for the inflow of combustion gas into combustions chambers 30 as well as the outflow of combustion product gases therefrom (see FIG. 2F described in further detail below).

FIGS. 2A-2C illustrate respectively the ignition, mixing, and pre-reaction stages of pyrolysis system 200. These stages are similar to the ignition, mixing, and pre-reaction stages of FIGS. 1A-1C described above and are therefore not described in further detail.

Turning to FIG. 2D, there is shown a combustion products displacement stage of pyrolysis system 200. During the combustion products displacement stage, pistons 37 are driven downwardly to reduce the effective volumes of combustion chambers 30 and thereby increase the pressure within combustion chambers 30. This in turn causes some of combustion products 40 remaining within combustion chambers 30 to flow into mixing chamber 10. These combustion products 40 mix with unreacted feedstock gas 50 within mixing chamber 10 and thereby drive further decomposition of feedstock gas 50 within mixing chamber 10. As a result, a greater overall proportion of hot combustion products 40 that are formed within combustion chambers 30 are caused to flow into mixing chamber 10 and drive decomposition of feedstock gas 50 therein. In addition, the increase of pressure within combustion chambers 30 (in response to the actuation of pistons 37) may prevent reaction products generated in mixing chamber 10 as a result of the feedstock decomposition flowing back into combustion chambers 30.

Turning to FIG. 2E, there is shown a post-reaction stage of pyrolysis system 200. During the post-reaction stage, the pressures within combustion chambers 30 and mixing chamber 10 have equalized. Some hot combustion products 40 remain in combustion chambers 30 and in fluid pathways 32. Mixing chamber 10 generally comprises reaction products 52 formed from the decomposition of feedstock gas 50. For example, in the case of a hydrocarbon feedstock, mixing chamber 10 generally contains carbon and hydrogen as reaction products 52.

Turning to FIG. 2F, there is shown a quenching stage of pyrolysis system 200. During the quenching stage, outlet valve 14 is opened to quench the pyrolysis reaction, resulting in quenched reaction products 54 within mixing chamber 10 being extracted from mixing chamber 10 via outlet valve 14. In addition, all / most of combustion products 40 remaining within combustion chambers 30 and fluid pathways 32 are vented by opening inlets/outlets 38. At the end of the quenching stage, some quenched reaction products 54 remain within mixing chamber 10 and fluid pathways 32, and combustion chambers 30 are generally full of unreacted feedstock 44.

Turning to FIG. 2G, there is shown a filling stage of pyrolysis system 200. During the filling stage, fresh combustion gas 46 is fed into combustion chambers 30 via inlets/outlets 38. At the same time, pistons 37 are retracted to increase the effective volumes of combustion chambers 30. Pistons 37 should preferably be retracted at a speed that avoids the creation of any low- or high-pressure regions within pyrolysis system 200. At the same time, fresh feedstock gas 50 is fed into mixing chamber 10 via inlet valve 12 and pushes quenched reaction products 54 within mixing chamber 10 out of mixing chamber 10 via outlet valve 14. At the end of the filling stage, combustion chambers 30 and fluid pathways 32 generally contain pressurized combustion gas while mixing chamber 10 generally contains pressurized feedstock gas 50 (and any reaction products or combustion products that may not have been evacuated from mixing chamber 10) ready for decomposition in the next reaction cycle.

More generally, any means of increasing the pressure within combustion chambers 30, or reducing an effective volume of combustion chambers 30, may be used in order to force additional combustion product gases from combustion chambers 30 into mixing chamber 10. It shall therefore be recognized that the use of pistons is only way of achieving this goal.

Other means of triggering combustion may be used. For example, instead of using igniters, the feedstock gas may be delivered to the mixing chamber at a temperature (known as an auto-ignition temperature) that is already sufficiently high to trigger combustion of the combustible gas in response to the combustible gas flowing into the mixing chamber and contacting the feedstock gas. Therefore, according to such embodiments, there is no need to ignite the combustible gas prior to injecting the combustible gas into the mixing chamber, and instead the combustible gas may spontaneously combust as a result of flowing into the mixing chamber and contacting the feedstock gas.

While the above embodiments have generally been described in the context of decomposing hydrocarbons (including, for example, natural gas, methane, ethylene, and propylene), the concepts described herein may be applied to other feedstocks, such as ammonia and methanol.

The terms "a" or "an" when used in conjunction with the terms "comprising" or "including" in the claims and/or the specification can mean "one" but it is also consistent with the meaning of "one or more", "at least one", and "one or more than one" unless the content clearly dictates otherwise. Similarly, the word "another" may mean at least a second or more, unless the content clearly dictates otherwise.

The terms "coupled", "coupled", or "connected" as used herein, may have a number of different meanings depending on the context in which the terms are used. For example, the terms coupled, or connected may have a mechanical or electrical meaning. For example, as used herein, the terms coupled, or connected may indicate that two elements or devices are connected to each other directly or via one or more intermediate elements or devices via electrical, or mechanical elements, depending on the particular context. The term "and/or" as used herein when used in association with a list of items refers to any one or more of the items comprising the list.

As used herein, reference to "about" or "approximately" a number or "substantially" is equal to a number means within +/-10% of the number.

While the disclosure has been described in connection with specific embodiments, it is to be understood that the disclosure is not limited to these embodiments, and that alterations, modifications, and variations of these embodiments may be carried out by the skilled person without departing from the scope of the disclosure.

It is furthermore contemplated that any part of any aspect or embodiment discussed in this specification can be implemented or combined with any part of any other aspect or embodiment discussed in this specification.

## Claims

1. A method of decomposing a feedstock gas, comprising:
introducing the feedstock gas into a mixing chamber;
introducing a combustion gas into a combustion chamber connected to the mixing chamber;
combusting the combustion gas so as to produce one or more combustion product gases, wherein:
a first portion of the one or more combustion products gases flows into the mixing chamber and mixes with the feedstock gas; and
a second portion of the one or more combustion products gases initially remains in the combustion chamber;
decomposing at least some of the feedstock gas as a result of the first portion of the one or more combustion products gases flowing into the mixing chamber and mixing with the feedstock gas; and
flowing at least some of the second portion of the one or more combustion product gases into the mixing chamber and mixing the at least some of the second portion of the one or more combustion product gases with undecomposed feedstock gas, so as to decompose at least some of the undecomposed feedstock gas.

2. The method of claim 1, wherein the second portion of the one or more combustion product gases initially remains in the combustion chamber as a result of a pressure in the combustion chamber being equal to a pressure in the mixing chamber.

3. The method of claim 1 or 2, wherein flowing the at least some of the second portion of the one or more combustion product gases into the mixing chamber comprises increasing a pressure within the combustion chamber to force the at least some of the second portion of the one or more combustion product gases into the mixing chamber.

4. The method of claim 3, wherein increasing the pressure within the combustion chamber comprises reducing a volume of the combustion chamber.

5. The method of any one of claims 1-4, wherein flowing the at least some of the second portion of the one or more combustion product gases comprises introducing a fluid into the combustion chamber to increase a pressure in the combustion chamber and force the at least some of the second portion of the one or more combustion product gases into the mixing chamber.

6. The method of claim 5, wherein the fluid is further feedstock gas.

7. The method of claim 5 or 6, wherein:
decomposing the at least some of the feedstock gas produces one or more product gases;
the method further comprises venting the one or more product gases from the mixing chamber; and
the fluid comprises at least some of the vented one or more product gases.

8. The method of any one of claims 1-7, wherein the feedstock gas comprises a hydrocarbon.

9. The method of any one of claims 1-8, wherein the combustion gas comprises oxygen or air.

10. A system for decomposing a feedstock gas, comprising:
a source of combustion gas;
a source of the feedstock gas;
a combustion chamber connected to a mixing chamber;
valving for opening and closing one or more openings in each of the combustion chamber and the mixing chamber;
a driving mechanism;
an igniter;
one or more controllers configured to:
control the valving so as to:
cause the combustion gas to flow into the combustion chamber;
cause the feedstock gas to flow into the mixing chamber;
control the igniter so as to combust the combustion gas in the combustion chamber and thereby produce one or more combustion product gases, wherein:
a first portion of the one or more combustion products gases flows into the mixing chamber, mixes with the feedstock gas, and thereby decomposes at least some of the feedstock gas; and
a second portion of the one or more combustion products gases initially remains in the mixing chamber; and
control the driving mechanism so as to cause at least some of the second portion of the one or more combustion product gases to flow into the mixing chamber, mix with the undecomposed feedstock gas, and thereby decompose at least some of the undecomposed feedstock gas.

11. The system of claim 10, wherein the driving mechanism comprises a piston.

12. The system of claim 10 or 11, further comprising a vent in the combustion chamber, and wherein:
after decomposing at least some of the undecomposed feedstock gas, a third portion of the one or more combustion product gases remains in the combustion chamber; and
the controller is further configured to control the vent to vent the third portion of the one or more combustion product gases from the combustion chamber.

13. The system of claim 12, wherein the vent is located at an end of the combustion chamber that is adjacent the mixing chamber.

14. The system of claim 10, wherein:
the driving mechanism comprises a fluid; and
controlling the driving mechanism comprises controlling the valving so as to introduce the fluid into the combustion chamber.

15. The system of claim 14, wherein the fluid is one or more of hydrogen, carbon dioxide, carbon monoxide, water, steam, an inert or non-reactive gas, and further feedstock gas.

## Amended claims

### Amended claims in accordance with Rule 137(2) EPC.

1. A method of decomposing a feedstock gas, comprising:
introducing the feedstock gas (50) into a mixing chamber (10);
introducing a combustion gas into a combustion chamber (30) connected to the mixing chamber;
combusting the combustion gas so as to produce one or more combustion product gases (40), wherein:
a first portion of the one or more combustion products gases flows into the mixing chamber and mixes with the feedstock gas; and
a second portion of the one or more combustion products gases initially remains in the combustion chamber;
decomposing at least some of the feedstock gas as a result of the first portion of the one or more combustion products gases flowing into the mixing chamber and mixing with the feedstock gas; and
flowing at least some of the second portion of the one or more combustion product gases into the mixing chamber and mixing the at least some of the second portion of the one or more combustion product gases with undecomposed feedstock gas, so as to decompose at least some of the undecomposed feedstock gas.

2. The method of claim 1, wherein the second portion of the one or more combustion product gases initially remains in the combustion chamber as a result of a pressure in the combustion chamber being equal to a pressure in the mixing chamber.

3. The method of claim 1 or 2, wherein flowing the at least some of the second portion of the one or more combustion product gases into the mixing chamber comprises increasing a pressure within the combustion chamber to force the at least some of the second portion of the one or more combustion product gases into the mixing chamber.

4. The method of claim 3, wherein increasing the pressure within the combustion chamber comprises reducing a volume of the combustion chamber.

5. The method of any one of claims 1-4, wherein flowing the at least some of the second portion of the one or more combustion product gases comprises introducing a fluid into the combustion chamber to increase a pressure in the combustion chamber and force the at least some of the second portion of the one or more combustion product gases into the mixing chamber.

6. The method of claim 5, wherein the fluid is further feedstock gas (44).

7. The method of claim 5 or 6, wherein:
decomposing the at least some of the feedstock gas produces one or more product gases (54);
the method further comprises venting the one or more product gases from the mixing chamber; and
the fluid comprises at least some of the vented one or more product gases.

8. The method of any one of claims 1-7, wherein the feedstock gas comprises a hydrocarbon.

9. The method of any one of claims 1-8, wherein the combustion gas comprises oxygen or air.

10. A system for decomposing a feedstock gas, comprising:
a source of combustion gas;
a source of the feedstock gas;
a combustion chamber (30) connected to a mixing chamber (10);
valving (12, 14, 36) for opening and closing one or more openings in each of the combustion chamber and the mixing chamber;
a driving mechanism;
an igniter (34);
one or more controllers configured to:
control the valving so as to:
cause the combustion gas to flow into the combustion chamber;
cause the feedstock gas to flow into the mixing chamber;
control the igniter so as to combust the combustion gas in the combustion chamber and thereby produce one or more combustion product gases (40), wherein:
a first portion of the one or more combustion products gases flows into the mixing chamber, mixes with the feedstock gas, and thereby decomposes at least some of the feedstock gas; and
a second portion of the one or more combustion products gases initially remains in the mixing chamber; and
control the driving mechanism so as to cause at least some of the second portion of the one or more combustion product gases to flow into the mixing chamber, mix with the undecomposed feedstock gas, and thereby decompose at least some of the undecomposed feedstock gas.

11. The system of claim 10, wherein the driving mechanism comprises a piston (37).

12. The system of claim 10 or 11, further comprising a vent (38) in the combustion chamber, and wherein:
after decomposing at least some of the undecomposed feedstock gas, a third portion of the one or more combustion product gases remains in the combustion chamber; and
the controller is further configured to control the vent to vent the third portion of the one or more combustion product gases from the combustion chamber.

13. The system of claim 12, wherein the vent is located at an end of the combustion chamber that is adjacent the mixing chamber.

14. The system of claim 10, wherein:
the driving mechanism comprises a fluid; and
controlling the driving mechanism comprises controlling the valving so as to introduce the fluid into the combustion chamber.

15. The system of claim 14, wherein the fluid is one or more of hydrogen, carbon dioxide, carbon monoxide, water, steam, an inert or non-reactive gas, and further feedstock gas.
